(19) Europäisches Patentamt
European Patent Office
Office européen des brevets

(11) EP 1 121 571 B1

(12) FASCICULE DE BREVET EUROPEEN

(45) Date de publication et mention de la délivrance du brevet:
**25.11.2009 Bulletin 2009/48**

(21) Numéro de dépôt: **99970460.4**

(22) Date de dépôt: **08.10.1999**

(51) Int Cl.:
***G01C 23/00*** *(2006.01)* ***G01P 13/02*** *(2006.01)*

(86) Numéro de dépôt international:
**PCT/FR1999/002418**

(87) Numéro de publication internationale:
**WO 2000/022382 (20.04.2000 Gazette 2000/16)**

# (54) INSTRUMENTS COMBINES DE SECOURS POUR AERONEF

KOMBINIERTE STANDBY-INSTRUMENTE FÜR FLUGZEUG

COMBINED STANDBY INSTRUMENTS FOR AIRCRAFT

(84) Etats contractants désignés:
**DE ES FR GB IT**

(30) Priorité: **13.10.1998 FR 9812809**

(43) Date de publication de la demande:
**08.08.2001 Bulletin 2001/32**

(73) Titulaire: **THALES AVIONICS S.A.**
**78141 Vélizy Villacoublay Cédex (FR)**

(72) Inventeurs:
- **LEBLOND, Henri**
  **Thomson-CSF Prop. Intel. Dept. Bre.**
  **94117 Arcueil Cedex (FR)**
- **CHEVALIER, Jean**
  **Thomson-CSF Prop. Intel. Dep. Bre.**
  **94117 Arcueil Cedex (FR)**
- **ESCOBAR, Edouard**
  **Thomson-CSF Prop. Int. Dept. Bre.**
  **94117 Arcueil Cedex (FR)**

(74) Mandataire: **Beylot, Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**FR-A- 2 569 848** **FR-A- 2 725 033**
**US-A- 4 598 292**

- **PATENT ABSTRACTS OF JAPAN vol. 012, no. 329 (P-754), 7 septembre 1988 (1988-09-07) & JP 63 091510 A (TECH RES & DEV INST OF JAPAN DEF AGENCY), 22 avril 1988 (1988-04-22)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 121 571 B1

## Description

La présente invention concerne des instruments de secours délivrant aux pilotes d'un aéronef, en cas de panne des instruments principaux, un minimum de trois informations critiques qui sont : la vitesse de l'aéronef par rapport à l'air ou vitesse conventionnelle déduite d'une mesure de pression dynamique, l'altitude de l'aéronef déduite d'une mesure de pression statique et l'attitude de l'aéronef obtenue à partir d'informations provenant de capteurs inertiels.

La vitesse conventionnelle est l'image de la pression dynamique dont dépend la portance. Elle permet notamment au pilote d'un avion de décider l'instant du décollage et d'estimer sa marge de sécurité par rapport au risque de décrochement ou de perte brusque de portance.

L'altitude est utilisée de façon différente selon les phases du vol. En croisière, l'avion doit respecter le couloir aérien qui lui est attribué et, pour cela, maintenir un niveau de vol donné défini en altitude standard ou altitude pression. L'altitude standard ou altitude pression est une altitude théorique déduite de la mesure de la pression statique et traduite en hauteur théorique après avoir fait un certain nombre d'hypothèses sur les propriétés physique de l'atmosphère dans laquelle l'aéronef évolue. Elle est très différente de l'altitude réelle par rapport au sol ou au niveau de la mer. Les écarts peuvent atteindre plusieurs milliers de pieds mais l'indication fournie en valeur relative pour un même lieu est très précise et conduit à une définition très sûre des couloirs aériens car tous les aéronefs utilisent le même modèle d'atmosphère.

Les couloirs ou niveaux de vol attribués aux aéronefs par les contrôleurs de la navigation aérienne ont une hauteur qui tient compte de la précision de mesure de l'altitude standard ou altitude pression. Par exemple, au-dessus du niveau 290 correspondant à 29000 pieds, un couloir aérien a une hauteur de 1000 pieds alors que la précision de mesure de l'altitude standard ou altitude pression est meilleure que 100 pieds. Le risque de collision est donc quasi-nul.

En cas de visibilité insuffisante, le pilote doit disposer d'une référence de verticale, donnée par un indicateur d'attitude, pour faire évoluer l'aéronef en toute sécurité et éviter de mettre l'aéronef dans une attitude interdite par les spécifications de construction de la machine.

Ces trois informations de base, considérées comme critiques au sens de la sécurité, sont fournies au pilote et au copilote d'un aéronef sous une forme redondante pour que la probabilité de perte totale ou d'information erronée soit quasi-nulle. Pour des avions devant transporter des passagers, il est de règle de tripler les instruments de bord fournissant ces informations de base. Il y a à bord, de façon quasi-systématique, trois ensembles indépendants d'instruments : un premier pour le pilote, un deuxième pour le copilote et un troisième de secours. Le pilote et le copilote disposent chacun de leur propre ensemble d'instruments avec des visualisations dites principales à base de tubes cathodiques ou de cristaux liquides tandis que l'ensemble d'instruments de secours est disposé sur une console centrale séparant les postes du pilote et du copilote.

Les instruments de secours n'ont pas à être tout à fait aussi précis que les instruments principaux destinés au pilote et au copilote puisqu'ils ne servent, en temps normal, que de référence pour tester le bon fonctionnement des instruments principaux. Mais il doivent par contre être d'une très grande fiabilité de fonctionnement.

Jusqu'à très récemment, la fiabilité des instruments de secours était basée sur des réalisations purement mécaniques ou pneumatiques ne nécessitant pas le recours au réseau d'alimentation électrique du bord ni le montage sur l'extérieur du fuselage de sondes de mesure autres que des sondes de pression, sans pièce mobile, raccordées par des tuyauteries pneumatiques. Par opposition, les réalisations des instruments des systèmes principaux font appel, pour améliorer la précision des indications fournies, à une part de plus en plus grande d'électronique impliquant l'utilisation du réseau d'alimentation électrique du bord et à diverses sondes de mesure dont des sondes d'incidence aérodynamique qui sont montées sur l'extérieur du fuselage de l'aéronef et renferment des capteurs électromécaniques nécessitant un câblage électrique de liaison. La fiabilité des systèmes d'instruments principaux est affectée par celles du réseau électrique de bord et des sondes de mesure non purement statiques utilisées sur l'extérieur du fuselage. Elle est également affectée par une certaine sensibilité aux agressions radioélectriques de l'environnement de l'aéronef tel que le foudroiement due à la présence du câblage électrique de liaison raccordant les instruments à certaines sondes de mesure placées à l'extérieur du fuselage.

Compte tenu de ces considérations, la recherche de la plus grande sécurité possible de fonctionnement conduisait jusqu'à présent à utiliser en tant qu'instruments de secours : un altimètre pneumatique, un anémomètre mécanique ou "Badin" et un indicateur d'attitude ou "horizon artificiel" gyroscopique.

L'évolution actuelle des technologies a permis d'atteindre maintenant pour le réseau d'alimentation électrique d'un aéronef un niveau de sécurité tel que l'on peut admettre qu'une source d'énergie électrique sera toujours disponible à bord pour un minimum d'instruments et d'équipements quelques soient les conditions de panne rencontrées. C'est pourquoi, on projette depuis peu de temps d'introduire de l'électronique dans les instruments de secours afin d'améliorer leurs précisions et de diminuer leur coût de maintenance, cela sans affecter pour autant leur sécurité de fonctionnement. On envisage, notamment, comme le montre le brevet américain US 4,598,292 de remplacer les trois instruments conventionnels de secours purement mécaniques et pneumatiques par des instruments combinés entièrement électroniques qui fournissent sur un écran à cristaux liquides les trois informations critiques pour la conduite d'un vol que sont : l'altitude pression, la vitesse conventionnelle et l'attitude de l'aéronef. Cependant, il reste toujours nécessaire, pour assurer un haut niveau de sécurité, de maintenir une indépendance complète entre le système d'instruments de secours, et les systèmes d'instruments principaux pour le pilote et le copilote ainsi que d'éviter le recours pour le système d'instruments de secours à des sondes de mesure montées sur l'extérieur du fuselage de l'aéronef qui ne soient pas purement statiques ou nécessitent un raccordement par du câblage électrique. Cela conduit à conserver au système d'instruments de secours, ses propres chaînes de mesure et ses sondes de mesure habituelles. Ainsi, le système d'instruments de secours possédera toujours ses propres moyens inertiels pour déterminer l'attitude de l'aéronef par rapport à la verticale et ses propres chaînes de mesure reliées à des sondes de mesure pneumatiques pour déterminer la vitesse conventionnelle et l'altitude pression.

Les moyens inertiels du système d'instruments de secours sont constitués, par exemple, par une toupie gyroscopique asservie à la verticale apparente par un dispositif érecteur qui maintient une référence de verticale précise à quelques dixièmes de degrés près, cette toupie gyroscopique pouvant être synthétisée au moyen de capteurs inertiels de vitesse angulaire et d'accéléromètres ou inclinomètres.

La chaîne de mesure de vitesse conventionnelle du système d'instruments de secours déduit classiquement, la vitesse conventionnelle de la pression dynamique qui est la différence entre la pression totale et la pression statique, par mise en oeuvre de la loi de St Venant ou de l'équation de Rayleigh en supersonique.

La chaîne de mesure de l'altitude pression du système d'instruments de secours déduit classiquement, l'altitude pression de la pression statique, par application des relations normalisées issues des équations de Laplace pour l'atmosphère standard.

Les mesures de pression totale et pression statique pour le compte du système d'instruments de secours sont faites indépendamment des systèmes principaux d'instruments pour le pilote et le copilote, la pression totale étant mesurée à l'aide d'un capteur de pression spécifique relié à un tube de Pitot installé sur le fuselage de l'aéronef parallèlement à son axe longitudinal tandis que la pression statique est mesurée à l'aide d'un autre capteur de pression spécifique relié à une prise d'air particulière aussi peu influencée que possible par le champ aérodynamique de l'aéronef.

La pression totale est facile à mesurer car elle correspond avec une très bonne précision à la pression mesurée au fond d'un tube de Pitot, dès l'instant où ce tube est approximativement aligné dans le sens de l'écoulement de l'air sur le fuselage d'un aéronef. La précision est meilleure que le pour-cent dans le domaine de vol subsonique.

La pression statique autour d'un aéronef est perturbée par là présence de l'aéronef lui-même car le champ aérodynamique de l'aéronef modifie la pression autour de son fuselage. Cette modification est approximativement proportionnelle au carré de la vitesse de l'écoulement local. Pour la mesure de la pression statique, on utilise principalement deux types de prise d'air. Les unes sont constituées par des orifices percés dans la surface même du fuselage de l'aéronef, le plus souvent vers l'avant du fuselage. Les autres font partie d'une antenne anémométrique spéciale statique ou dynamique dite sonde Pitot.

L'écart entre la pression statique vraie et la pression statique donnée par une prise de pression statique sur un aéronef est fonction principalement, de l'emplacement de la prise sur l'aéronef, du dérapage, du nombre de Mach et de l'incidence aérodynamique de l'aéronef. On caractérise cet écart par un coefficient appelé "coefficient de statique", de même nature que le coefficient de pression employé pour l'étude des répartitions de pression autour des profils.

Pour réduire l'écart de statique, les aéronefs modernes sont équipés soit de prises de pression statique de fuselage avec une correction aérodynamique de l'erreur de statique au moyen d'un profilage particulier de la surface du fuselage au voisinage immédiat des prises d'air, soit de sondes Pitot mobiles montées sur un volet mobile s'orientant librement dans l'écoulement de l'air, soit encore de sondes Pitot statiques aérodynamiquement compensées par un profilage particulier du tube de la sonde et par des orifices auxiliaires latéraux.

Lorsqu'une sonde Pitot est montée sur un volet mobile, l'orientation du volet mobile permet une mesure mécanique de l'incidence de l'aéronef dont il est connu, notamment par la demande de brevet français FR 2.569.848, de corriger les erreurs au moyen d'une mesure pneumatique de l'incidence aérodynamique du volet mobile dans l'écoulement d'air.

Lorqu'une sonde Pitot est statique et aérodynamiquement compensée par un profilage particulier de son tube et par des orifices auxiliaires latéraux, elle est conçue de manière à présenter une certaine sensibilité aux variations de l'incidence aérodynamique locale, cette sensibilité étant calculée de façon à compenser les variations du champ aérodynamique local tel que vu par la sonde à l'emplacement retenu sur le fuselage ou en un autre endroit spécifique.

La mise au point de la forme d'une sonde Pitot statique aérodynamiquement compensée est difficile car le champ aérodynamique dépend des conditions de vol et, dans une mesure moindre, de la configuration de l'aéronef (position des surfaces de contrôle, du train d'atterrissage...). Dans la pratique, une prise de pression statique sur un aéronef reste toujours affectée d'une erreur de mesure systématique tributaire, pour l'essentiel, en dehors des phases de vol dynamique, du dérapage de l'aéronef, du nombre de Mach et de l'incidence aérodynamique de l'aéronef.

Il est connu de combattre l'influence du dérapage par un mélange des informations de pression issues de deux sondes de pression statique disposées de chaque côté, à droite et à gauche du fuselage de l'aéronef.

Il est aussi connu par la demande de brevet français FR 2.725.033 d'appliquer aux mesures de prises de pression statique de fuselage des facteurs correctifs dépendant de la température statique et du vecteur vitesse air mesuré par anémométrie laser.

Il est également connu de tenir compte du nombre de Mach et de l'angle d'incidence aérodynamique de l'aéronef en appliquant, à la valeur mesurée de pression statique, un facteur de correction dont la valeur est choisie en fonction du nombre de Mach et de l'angle d'incidence aérodynamique de l'aéronef selon des lois définies lors de l'étude de l'aéronef et de ses premiers essais en vol.

Jusqu'à présent, la correction de la mesure de pression statique en fonction du nombre de Mach et de l'angle d'incidence aérodynamique de l'aéronef n'est pas faite dans les systèmes d'instruments de secours qu'ils soient purement mécaniques ou incluent une part d'électronique. Elle est uniquement faite par les calculateurs des systèmes principaux d'instruments du pilote et du copilote qui tirent le nombre de Mach du rapport existant entre la pression totale et la pression statique mesurées et qui reçoivent la valeur de l'angle d'incidence aérodynamique d'une ou plusieurs sondes d'incidence ou girouettes placées sur les flancs de l'aéronef.

L'introduction d'une part d'électronique dans le système d'instruments de secours pour le pilotage d'un aéronef rend possible la correction de la pression statique mesurée en fonction du nombre de Mach et de l'angle d'incidence aérodynamique de l'aéronef pour une meilleure appréciation de l'altitude barométrique. Cependant, elle nécessite la connaissance de l'angle d'incidence aérodynamique de l'aéronef qui ne peut plus être obtenue d'une sonde d'incidence placée sur les flancs de l'aéronef, pour des raisons de sécurité, cette sonde pouvant être hors d'usage en cas de panne avionique et pouvant même induire des pannes dans le système d'instruments de secours par propagation d'un foudroyage en raison de son raccordement électrique.

La présente invention a pour but de résoudre cette difficulté. Elle a plus généralement pour but d'améliorer la précision des instruments de secours d'un aéronef sans pour autant en augmenter le coût ou en diminuer la sécurité de fonctionnement.

Elle a pour objet des instruments combinés de secours pour aéronef délivrant des indications sur la vitesse conventionnelle, l'altitude standard et l'attitude de l'aéronef et comportant pour ce faire :

- deux entrées pneumatiques de mesuré de pression, l'une pour la pression totale et l'autre pour la pression statique,,
- une chaîne électronique de mesure de pression totale équipée d'un capteur électronique de pression raccordé à l'entrée pneumatique dédiée à la pression totale,
- une chaîne électronique de mesure de pression statique équipée d'un capteur électronique de pression raccordé à l'entrée pneumatique de pression statique,
- une chaîne électronique de mesures inertielles équipée de capteurs inertiels gyrométriques et de capteurs inertiels accéléromètriques ou inclinomètriques,
- un calculateur électronique déduisant une indication de vitesse conventionnelle des informations de pression totale et de pression statique fournies par les chaînes électroniques de mesure de pression totale et de pression statique, une indication d'altitude standard de l'information de pression statique fournie par la chaîne électronique de mesure de pression statique et des indications sur l'attitude de l'aéronef (angle de tangage $\theta$ et angle de roulis $\varphi$) par rapport à une direction de référence verticale des informations fournies par la chaîne électronique de mesures inertielles, et
- des moyens optoélectroniques d'affichage des indications de vitesse conventionnelle, d'altitude standard et d'attitude fournies par le calculateur électronique,

ces instruments combinés de secours étant remarquables en ce que le calculateur électronique comporte en outre :

- des moyens électroniques d'élaboration de l'angle d'incidence aérodynamique $\alpha$ de l'aéronef opérant à partir de l'indication d'attitude en tangage (angle de tangage $\theta$ de l'aéronef), de l'indication de vitesse conventionnelle et de l'indication d'altitude standard délivrées par le calculateur électronique, et
- des moyens électroniques de correction de l'information de pression statique fournie par la chaîne électronique de mesure de pression statique prenant en compte un coefficient de correction fonction de l'indication d'angle d'incidence aérodynamique $\alpha$ de l'aéronef délivrée par les moyens électroniques d'élaboration d'angle d'incidence aérodynamique.

Avantageusement, le calculateur des instruments combinés de secours comporte en outre des moyens électroniques d'élaboration du nombre de Mach opérant à partir du rapport de la pression totale tirée de l'information de pression totale fournie par la chaîne électronique de mesure de pression totale sur la pression statique tirée de l'information de pression statique fournie par la chaîne électronique de mesure de pression statique, les moyens électroniques de correction de l'information de pression statique fournie par la chaîne électronique de pression statique prenant en compte un coefficient de correction fonction à la fois de l'indication d'angle d'incidence aérodynamique de l'aéronef délivrée par les moyens électroniques d'élaboration d'angle d'incidence aérodynamique $\alpha$ et de l'indication de nombre de Mach délivrée par les moyens électroniques d'élaboration du nombre de Mach.

D'autres caractéristiques et avantages de l'invention ressortiront de la description ci-après d'un mode de réalisation donné à titre d'exemple. Cette description sera faite en regard du dessin dans lequel :

- une figure 1 illustre, sous forme de synoptique, les principes généraux des calculs à effectuer à partir des mesures des pressions totale et statique, et des mesures gyrométriques et accélérométriques ou inclinomètriques pour obtenir les informations de pilotage que sont l'altitude pression, la vitesse conventionnelle et les angles de tangage et de roulis,
- une figure 2 illustre sous forme de synoptique une première correction possible de la mesure de la pression statique lorsque l'on considère que l'erreur est seulement liée à la vitesse,
- une figure 3 illustre, sous forme de synoptique, une deuxième correction possible de la mesure de pression statique tenant compte non seulement de l'erreur due à la vitesse mais également de celle due à l'angle d'incidence aérodynamique, et
- une figure 4 représente schématiquement l'architecture d'un système d'instruments combinés de secours pour aéronef conforme à l'invention.

Comme on l'a vu précédemment, pour qu'il y ait un niveau de sécurité acceptable à bord d'un aéronef, il faut que les instruments de bord soient capables de fournir au pilote, à tout instant et quelles que soient les circonstances, un minimum d'indications sur l'altitude standard de l'aéronef, sa vitesse conventionnelle et son attitude par rapport à un axe de référence vertical. Pour parvenir à ce résultat, à bord d'un aéronef transportant des passagers, on utilise la redondance, en équipant l'aéronef de trois systèmes indépendants d'instruments : un premier système principal d'instruments destiné au pilote, un deuxième système principal d'instruments destinés au copilote et un troisième système d'instruments de secours qui fournissent chacun ces grandeurs, indépendamment des autres. Les deux systèmes principaux d'instruments sont prévus pour être utilisés de manière habituelle par le pilote et le copilote et doivent de ce fait être le plus complet et le plus précis possibles. Ils affichent alors, avec une grande précision, les trois informations précitées parmi une multitude d'autres. Le système d'instruments de secours n'est prévu que pour servir, en temps normal, de référence pour le contrôle du bon fonctionnement des systèmes principaux d'instruments et pour être utilisés en secours, de manière exceptionnelle, en cas de défaillance de l'un ou des deux systèmes principaux d'instruments. A ce titre, il n'a pas à être complet ni à avoir la même précision que les systèmes principaux d'instruments. Il suffit qu'il affiche les trois informations essentielles d'altitude pression, de vitesse conventionnelle et d'attitude avec une précision moyenne mais il doit avoir une très grande sécurité de fonctionnement du fait de sa fonction de référence et de secours.

Pour la détermination de l'altitude pression, de la vitesse conventionnelle et de l'attitude de l'aéronef, un système d'instruments de secours, comme tout système d'instruments de bord, met en oeuvre des méthodes classiques connues de la technique aéronautique.

Pour obtenir la valeur de l'altitude pression, il procède à une mesure de pression statique à laquelle il applique des relations normalisées issues des équations de Laplace pour l'atmosphère standard.

Pour obtenir la valeur de la vitesse conventionnelle, il procède à des mesures de la pression totale et de la pression statique et applique à la différence entre la pression totale et la pression statique obtenues l'équation de St Venant ou l'équation de Rayleight en supersonique.

Pour davantage de détails sur ces méthodes de détermination de l'altitude pression et de la vitesse conventionnelle d'un aéronef, on peut se reporter aux ouvrages suivants :

[1] Jean IDRAC "Instruments de bord." 1954 Ecole supérieure de l'Aéronautique,
[2] Pierre REBUFFET "Aérodynamique expérimentale." 1950 Ecole supérieure de l'Aéronautique,
[3] M. KAPTON & W.R. FRIED "Avionics Navigation Systems 1997 John Wiley & Sons Inc.

Pour évaluer l'attitude, un système d'instruments de secours fait appel comme souvent, à des capteurs inertiels qui sont trois gyromètres ou capteurs de vitesse angulaire selon les trois axes, et des accéléromètres ou inclinomètres associés aux trois gyromètres. L'intégration des vitesses angulaires délivrées par les gyromètres, par des méthodes classiques qui font en général appel aux quaternions, donne les valeurs des angles de roulis $\varphi$ et de tangage $\theta$ de l'aéronef tandis que la dérive due aux défauts des gyromètres est compensée par une estimation de la verticale apparente faite à partir des informations données par les accéléromètres ou inclinomètres.

Pour davantage de détails sur la façon d'évaluer l'attitude d'un aéronef à partir des informations issues de capteurs inertiels, on peut se reporter au brevet français publié sous le n° 2 614 694, et déposé par la SFENA avec l'intitulé "Centrale d'attitude intégrée pour aérodyne."

La figure 1 résume, dans un synoptique, ces différentes méthodes classiques pour la détermination de l'altitude pression, de la vitesse conventionnelle et de l'attitude d'un aéronef qui sont utilisée par la plupart des systèmes d'instruments de bord actuels.

L'exigence de très grande sécurité de fonctionnement pousse à rechercher, pour un système d'instruments de secours, une totale indépendance vis à vis des autres équipements de l'aéronef, ce qui conduit à l'équiper de ses propres prises de pression totale et de pression statique, et de ses propres capteurs inertiels.

Comme on l'a vu précédemment, la prise de pression totale ne pose pas de problème car la pression totale correspond, avec une très bonne précision, à la pression mesurée au fond d'un tube de Pitot. Il n'en va pas de même de la prise de pression statique qui souffre du fait que la pression statique mesurée autour d'un aéronef est perturbée par la présence de l'aéronef.

Quelles que soient les précautions prises dans la conception de la sonde de pression statique et sa disposition sur le fuselage de l'aéronef, il subsiste une erreur systématique sur la mesure de pression statique nuisant à la précision de l'indication d'altitude pression qui en découle. Cette erreur systématique est due à l'influence du champ aérodynamique de l'avion et dépend principalement du dérapage de l'aéronef, du nombre de Mach et de l'angle d'incidence aérodynamique de l'aéronef.

L'influence du dérapage se combat par un mélange des informations de pression issues de deux sondes de pression statique disposées de chaque côté à droite et à gauche du fuselage de l'aéronef.

Les influences du nombre de Mach et de l'angle d'incidence aérodynamique de l'aéronef ne peuvent être prises en compte qu'au moyen d'un facteur de correction dont la valeur varie en fonction du nombre de Mach et de l'angle d'incidence aérodynamique selon des lois déterminées lors de l'étude de conception de l'aéronef et de ses essais en vol.

Une première approximation consiste à ne prendre en considération que l'influence du nombre de Mach. Cela revient à écrire que la différence $\delta_{Ps}$ entre la pression statique mesurée $P_s$ et la pression statique réelle $P_{S\infty}$ :

$$\delta_{Ps} = P_s - P_{s\infty}$$

est une fonction du rapport entre la pression totale $P_T$ et la pression statique mesurée $P_s$, et de la pression dynamique $P_T - P_s$ :

$$\delta_{P_s} = f_1(P_T/P_s, P_T - P_s)$$

fonction que l'on définit par une table de valeurs établie à partir d'études aérodynamiques de l'aéronef équipé de sa ou ses prises de pression statique et d'essais en vol. Il en découle une correction de la mesure de pression statique qui peut se faire par calcul selon le synoptique de la figure 2. Cette correction est facile à mettre en oeuvre dans un système d'instruments de secours dès qu'il comporte une part d'électronique permettant de le doter d'une certaine puissance de calcul. En effet, cela n'affecte pas sa sécurité de fonctionnement puisqu'il a déjà à sa disposition des mesures de la pression totale $P_T$ et de la pression statique $P_s$ qui lui sont fournies par ses propres sondes de pression.

Une deuxième approximation moins grossière que la première, consiste à prendre en considération non seulement l'influence du nombre de Mach mais également celle de l'angle d'incidence aérodynamique de l'aéronef. Cela revient à écrire que la différence $\delta_{Ps}$ entre la pression statique mesurée $P_s$ et la pression statique réelle $P_{S\infty}$ est une fonction à la fois du rapport entre la pression totale $P_T$ et la pression statique mesurée $P_s$, de la pression dynamique $P_T - P_s$ et de l'angle d'incidence aérodynamique $\alpha$ de l'aéronef :

$$\delta_{P_s} = f_2(P_T/P_s, P_T - P_s, \alpha)$$

fonction que l'on définit par une table de valeurs à deux entrées établie à partir d'études aérodynamiques de l'aéronef équipé de sa ou ses prises de pression statique et d'essais en vol. Il en découle une correction de la mesure de pression statique améliorant considérablement la précision de l'indication d'altitude pression.

Une telle correction est faite par les calculateurs des systèmes d'instruments principaux du pilote et du copilote qui tirent le nombre de Mach de mesures de pression totale et statique provenant de sondes de pression spécifiques à chaque système et qui reçoivent la valeur de l'angle d'incidence aérodynamique de sondes d'incidence ou girouettes disposées sur les flancs de l'aéronef.

Elle n'était pas faite jusqu'à présent dans le système d'instruments de secours lorsqu'il était de conception purement mécanique et pneumatique. Elle devient envisageable avec l'introduction d'une part d'électronique dans le système d'instrument de secours mais la nécessité de connaître l'angle d'incidence aérodynamique pose un problème car il n'est pas possible d'utiliser les indications des sondes d'incidence pour des questions de sécurité de fonctionnement. En effet, les exigences de sécurité de fonctionnement d'un système d'instruments de secours empêchent l'utilisation de capteurs placés sur l'extérieur de l'aéronef, incorporant des pièces mobiles ou nécessitant une liaison électrique car ces capteurs peuvent être hors d'usage en cas de panne avionique et même induire des pannes dans le système d'instruments de secours par propagation d'un foudroyage.

Pour rendre possible, dans un système d'instruments de secours, la compensation de l'erreur sur la mesure de la pression statique dépendant de l'angle d'incidence aérodynamique, sans pour autant diminuer la sécurité de fonctionnement d'un tel système, on propose d'obtenir la valeur de l'angle d'incidence aérodynamique à partir des informations qui sont déjà à la disposition du système d'instruments de secours, en évitant tout recours à une sonde d'incidence montée sur l'extérieur du fuselage de l'aéronef.

Pour ce faire, on remarque que le système d'instruments de secours dispose déjà de toutes les informations nécessaires à la détermination de l'angle d'incidence aérodynamique. En effet, en vol stabilisé, l'angle d'incidence aérodynamique $\alpha$ est égal à la différence entre l'angle de tangage $\theta$ de l'aéronef et l'angle de pente de sa trajectoire qui peuvent l'un et l'autre être tirés d'informations déjà en possession d'un système d'instruments de secours.

L'angle de tangage $\theta$ fait partie des informations d'attitude délivrées par le système d'instruments de secours.

L'angle de pente de la trajectoire est égal à l'arcsinus du rapport de la vitesse verticale $V_z$ de l'aéronef et de sa vitesse $V_t$ sur sa trajectoire. Or la vitesse verticale $V_z$ de l'aéronef peut être obtenue en effectuant une dérivée par rapport au temps de l'information d'altitude pression délivrée par le système d'instruments de secours tandis que la vitesse $V_t$ de l'aéronef sur sa trajectoire peut être obtenue à partir des informations de vitesse conventionnelle et d'altitude pression également fournies par le système d'instruments de secours en appliquant les lois bien connues de St Venant.

La figure 3 résume, sous une forme de synoptique, la méthode de traitement à laquelle on aboutit pour compenser, dans un système d'instruments de secours doté d'une certaine part d'électronique lui conférant des facultés de calcul, l'erreur sur la mesure de pression statique dépendant du nombre de Mach et de l'angle d'incidence aérodynamique et améliorer la précision de l'indication d'altitude pression sans pour autant diminuer la sécurité de fonctionnement.

La figure 4 illustre schématiquement, l'architecture d'un système d'instruments combinés de secours pour aéronef avec compensation d'erreur sur la mesure de pression statique en fonction du nombre de Mach et de l'angle d'incidence aérodynamique.

Ce système d'instruments combinés secours se présente sous la forme d'un châssis monobloc 1 plutôt allongé avec un afficheur à cristaux liquides 2 occupant la majeure partie de sa face avant et sur sa face arrière, deux prises pneumatiques 3, 4 destinées à être raccordées par des tuyaux électriquement isolants à des sondes de mesure de pression totale et de pression statique déportées sur l'extérieur de l'aéronef ainsi qu'une prise électrique à plusieurs contacts non représentée pour l'alimentation électrique et des fonctions auxiliaires de contrôle. L'intérieur du châssis 1 est subdivisé en trois compartiments principaux :

- un compartiment arrière qui renferme : une chaîne électronique de mesure de grandeurs inertielles 5 équipée d'un ensemble de capteurs inertiels de vitesses angulaires, d'accélérations ou d'inclinaisons associés aux trois axes, une chaîne électronique de mesure de pression totale 6 équipée d'un capteur électronique de pression monté sur la prise pneumatique destinée à être raccordée à une sonde de mesure de pression totale et une chaîne électronique de mesure de pression statique 7 équipée d'un capteur électronique de pression monté sur la prise pneumatique destinée à être raccordée à une sonde de mesure de pression statique.
- un compartiment central occupé par un ensemble électronique à microprocesseur 8 qui reçoit les informations des différentes chaînes de mesure 5, 6, 7, les numérise et les traite pour en tirer des indications d'altitude pression, de vitesse conventionnelle et d'attitude, et
- un compartiment avant occupé par un ensemble électronique 9 de gestion de l'afficheur à cristaux liquide assurant la présentation sur l'afficheur des différentes indications fournies par l'ensemble électronique à microprocesseur 8 du compartiment central.

L'ensemble électronique à microprocesseur 8 est programmé, pour effectuer sur les informations issues des différentes chaînes de mesure 5, 6, 7, deux sortes d'opérations :

- d'une part, les opérations habituelles de traitement et de calcul permettant de tirer des mesures de pression totale et de pression statique ainsi que des mesures inertielles, une indication d'altitude standard ou altitude pression, une indication de vitesse conventionnelle et des indications d'attitude (angles de tangage et de roulis) régulièrement remises à jour, et
- d'autre part, des opérations de calcul permettant de tirer des dernières indications obtenues d'altitude pression, de vitesse conventionnelle et d'attitude en roulis, une indication d'angle d'incidence aérodynamique, des opérations de calcul permettant de tirer des dernières informations de pression totale et de pression statique disponibles une indication de nombre de Mach, et une opération de correction d'erreur sur la mesure de pression statique à venir, tenant compte des indications obtenues sur l'angle d'incidence aérodynamique et le nombre de Mach.

Grâce à la correction faite sur la mesure de pression totale en fonction de l'angle d'incidence aérodynamique de l'aéronef, il est possible d'améliorer d'un ordre de grandeur la précision de l'indication d'altitude pression donnée par des instruments de secours sans en augmenter le coût ou en diminuer la sécurité de fonctionnement.

## Revendications

1. Instruments combinés de secours pour aéronef pour délivrer des indications sur la vitesse conventionnelle, l'altitude standard et l'attitude de l'aéronef et comportant pour ce faire :

- deux entrées pneumatiques (3, 4) de mesure de pression, l'une (3) pour la pression totale, et l'autre (4) pour la pression statique,,
- une chaîne électronique (6) de mesure de pression totale équipée d'un capteur électronique de pression raccordé à l'entrée pneumatique (3) de pression totale,
- une chaîne électronique (7) de mesure de pression statique équipée d'un capteur électronique de pression raccordé à l'entrée pneumatique (4) de pression statique,
- une chaîne électronique (5) de mesures inertielles équipée de capteurs inertiels gyrométriques et de capteurs inertiels accélérométriques ou inclinomètriques,
- un calculateur électronique (8) déduisant une indication de vitesse conventionnelle des informations de pression totale et de pression statique fournies par les chaînes électroniques de mesure (6, 7) de pression totale et de pression statique, une indication d'altitude standard de l'information de pression statique fournie par la chaîne électronique de mesure (7) de pression statique et des indications sur l'attitude de l'aéronef, angle de tangage $\theta$ et.angle de roulis $\varphi$, par rapport à une direction de référence verticale, des informations fournies par la chaîne électronique de mesures inertielles (5), et
- des moyens optoélectroniques d'affichage (2) des indications de vitesse conventionnelle, d'altitude standard et d'attitude fournies par le calculateur électronique (8),

ces instruments combinés de secours étant **caractérisés en ce que** le calculateur électronique (8) comporte en outre :

- des moyens électroniques d'élaboration de l'angle d'incidence aérodynamique $\alpha$ de l'aéronef opérant à partir de l'indication d'attitude en tangage, angle de tangage $\theta$ de l'aéronef, de l'indication de vitesse conventionnelle et de l'indication d'altitude standard délivrées par le calculateur électronique (8) lui-même, et
- des moyens électroniques de correction de l'information de pression statique fournie par la chaîne électronique (7) de mesure de pression statique prenant en compte un coefficient de correction fonction de l'indication d'angle d'incidence aérodynamique $\alpha$ de l'aéronef délivrée par les moyens électroniques d'élaboration d'angle d'incidence aérodynamique.

**2.** Instruments combinés de secours pour aéronef, selon la revendication 1, **caractérisés en ce que** le calculateur électronique (8) comporte en outre des moyens électroniques d'élaboration du nombre de Mach opérant à partir du rapport de la pression totale tirée de l'information de pression totale fournie par la chaîne électronique (6) de mesure de pression totale sur la pression statique tirée de l'information de pression statique fournie par la chaîne électronique (7) de mesure de pression statique, les moyens électroniques de correction de l'information de pression statique fournie par la chaîne électronique de pression statique prenant en compte un coefficient de correction fonction à la fois, de l'indication d'angle d'incidence aérodynamique $\alpha$ de l'aéronef délivrée par les moyens électroniques d'élaboration d'angle d'incidence aérodynamique et de l'indication de nombre de Mach délivrée par les moyens électroniques d'élaboration du nombre de Mach.

## Claims

**1.** Combined back-up instruments for aircraft, for delivering indications regarding the conventional speed, the standard altitude and the attitude of the aircraft and accordingly comprising:

- two pneumatic inlets (3, 4) for measuring pressure, one (3) for the total pressure, and the other (4) for the static pressure,
- an electronic portion (6) for measuring total pressure equipped with an electronic pressure sensor connected up to the pneumatic inlet (3) for total pressure,
- an electronic portion (7) for measuring static pressure equipped with an electronic pressure sensor connected up to the pneumatic inlet (4) for static pressure,
- an electronic portion (5) for inertial measurements, equipped with gyrometric inertial sensors and accelerometric or inclinometric inertial sensors,
- an electronic calculator (8) deducing an indication of conventional speed from the total pressure and static pressure information provided by the electronic portions (6, 7) for measuring total pressure and static pressure, an indication of standard altitude from the static pressure information provided by the electronic portion (7) for measuring static pressure and indications regarding the attitude of the aircraft, angle of pitch $\theta$ and angle of roll $\varphi$, relative to a vertical reference direction, from the information provided by the electronic portion for inertial measurements (5),
- optoelectronic means of display (2) of the indications of conventional speed, of standard altitude and of attitude which are provided by the electronic calculator (8),

these combined back-up instruments being **characterized in that** the electronic calculator (8) furthermore comprises:

- electronic means for computing the aerodynamic angle of incidence α of the aircraft operating on the basis of the indication of pitch attitude, angle of pitch θ of the aircraft, of the indication of conventional speed and of the indication of standard altitude which are delivered by the electronic calculator (8) itself, and
- electronic means of correcting the static pressure information provided by the electronic portion (7) for measuring static pressure taking into account a correction coefficient dependent on the indication of aerodynamic angle of incidence α of the aircraft as delivered by the electronic means for computing the aerodynamic angle of incidence.

**2.** Combined back-up instruments for aircraft, according to Claim 1, **characterized in that** the electronic calculator (8) furthermore comprises electronic means for computing the Mach number operating on the basis of the ratio of the total pressure derived from the total pressure information provided by the electronic portion (6) for measuring total pressure to the static pressure derived from the static pressure information and provided by the electronic portion (7) for measuring static pressure, the electronic means of correcting the static pressure information provided by the electronic portion for static pressure taking into account a correction coefficient dependent both on the indication of aerodynamic angle of incidence α of the aircraft as delivered by the electronic means of computing the aerodynamic angle of incidence and of the Mach number indication delivered by the electronic means of computing the Mach number.

## Patentansprüche

**1.** Kombinierte Luftfahrzeug-Notinstrumente, um Angaben über die Normgeschwindigkeit, die Standardflughöhe und die Fluglage des Luftfahrzeugs zu liefern, und die hierzu aufweisen:

- zwei pneumatische Druckmesseingänge (3, 4), der eine (3) für den Gesamtdruck und der andere (4) für den statischen Druck,
- eine elektronische Kette (6) zur Messung des Gesamtdrucks, die mit einem elektronischen Drucksensor ausgestattet ist, der mit dem pneumatischen Eingang (3) für den Gesamtdruck verbunden ist,
- eine elektronische Kette (7) zur Messung des statischen Drucks, die mit einem elektronischen Drucksensor ausgestattet ist, der mit dem pneumatischen Eingang (4) für den statischen Druck verbunden ist,
- eine elektronische Kette (5) für Trägheitsmessungen, die mit Kreisel-Trägheitssensoren und mit Beschleunigungs- oder Neigungs-Trägheitssensoren ausgestattet ist,
- einen elektronischen Rechner (8), der eine Normgeschwindigkeitsangabe von den Informationen über den Gesamtdruck und den statischen Druck, die von den elektronischen Ketten (6, 7) zur Messung des Gesamtdrucks und des statischen Drucks geliefert werden, eine Standardflughöhenangabe von der Information über den statischen Druck, die von der elektronischen Kette (7) zur Messung des statischen Drucks geliefert wird, und Angaben über die Fluglage des Luftfahrzeugs, Nickwinkel θ und Rollwinkel φ, bezüglich einer senkrechten Bezugsrichtung von den Informationen ableitet, die von der elektronischen Kette für Trägheitsmessungen (5) geliefert werden, und
- optoelektronische Anzeigeeinrichtungen (2) der Normgeschwindigkeits-, Standardflughöhen- und Fluglagenangaben, die vom elektronischen Rechner (8) geliefert werden,

wobei diese kombinierten Notinstrumente **dadurch gekennzeichnet sind, dass** der elektronische Rechner (8) außerdem aufweist:

- elektronische Einrichtungen zur Erarbeitung des aerodynamischen Anstellwinkels α des Luftfahrzeugs, die ausgehend von der Nickfluglagenangabe, Nickwinkel θ des Luftfahrzeugs, der Normgeschwindigkeitsangabe und der Standardflughöhenangabe arbeiten, die vom elektronischen Rechner (8) selbst geliefert werden, und
- elektronische Einrichtungen zur Korrektur der von der elektronischen Kette (7) zur Messung des statischen Drucks gelieferten Information über den statischen Druck unter Berücksichtigung eines Korrekturkoeffizienten, der von der Angabe des aerodynamischen Anstellwinkels α des Luftfahrzeugs abhängt, die von den elektronischen Einrichtungen zur Erarbeitung des aerodynamischen Anstellwinkels geliefert wird.

**2.** Kombinierte Notinstrumente für ein Luftfahrzeug nach Anspruch 1, **dadurch gekennzeichnet, dass** der elektronische Rechner (8) außerdem elektronische Einrichtungen zur Erarbeitung der Mach-Zahl aufweist, die ausgehend vom Verhältnis des Gesamtdrucks, der aus der von der elektronischen Kette (6) zur Messung des Gesamtdrucks gelieferten Information über den Gesamtdruck entnommen wird, zum statischen Druck arbeiten, der aus der von der elektronischen Kette (7) zur Messung des statischen Drucks gelieferten Information über den statischen Druck entnommen wird, wobei die elektronischen Einrichtungen zur Korrektur der Information über den statischen Druck, die von der elektronischen Kette des statischen Drucks geliefert wird, einen Korrekturkoeffizienten berücksichtigen, der sowohl von der Angabe des aerodynamischen Anstellwinkels $\alpha$ des Luftfahrzeugs, die von den elektronischen Einrichtungen zur Ausarbeitung des aerodynamischen Anstellwinkels geliefert wird, als auch von der Angabe der Mach-Zahl abhängt, die von den elektronischen Einrichtungen zur Erarbeitung der Mach-Zahl geliefert wird.

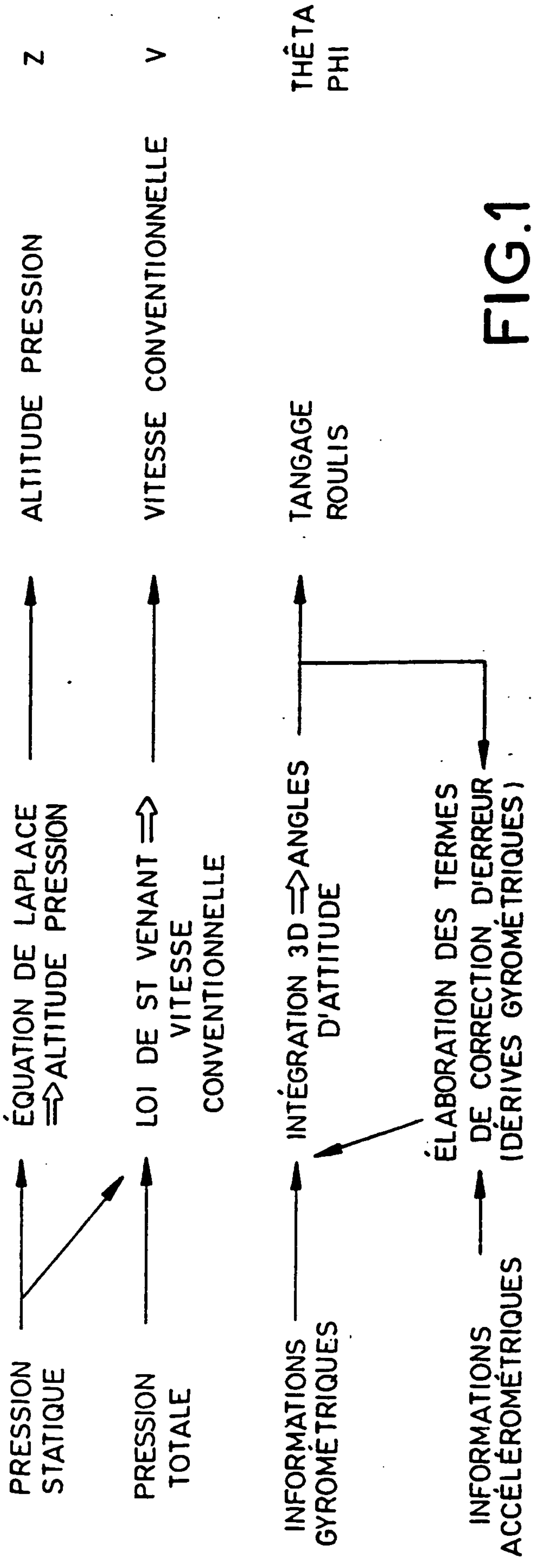
PRESSION STATIQUE
PRESSION TOTALE
ÉQUATION DE LAPLACE ⇒ALTITUDE PRESSION
LOI DE ST VENANT ⇒ VITESSE CONVENTIONNELLE
ALTITUDE PRESSION
Z
VITESSE CONVENTIONNELLE
V
INFORMATIONS GYROMÉTRIQUES
INFORMATIONS ACCÉLÉROMÉTRIQUES
INTÉGRATION 3D ⇒ANGLES D'ATTITUDE
ÉLABORATION DES TERMES DE CORRECTION D'ERREUR (DÉRIVES GYROMÉTRIQUES)
TANGAGE
ROULIS
THÊTA
PHI

FIG.1

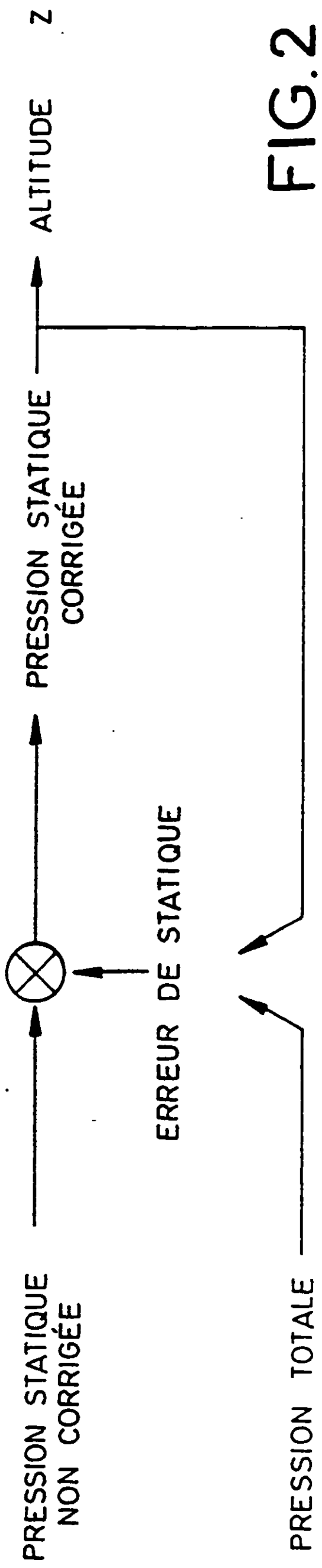
PRESSION STATIQUE NON CORRIGÉE
PRESSION TOTALE
ERREUR DE STATIQUE
PRESSION STATIQUE CORRIGÉE
ALTITUDE
Z

FIG.2

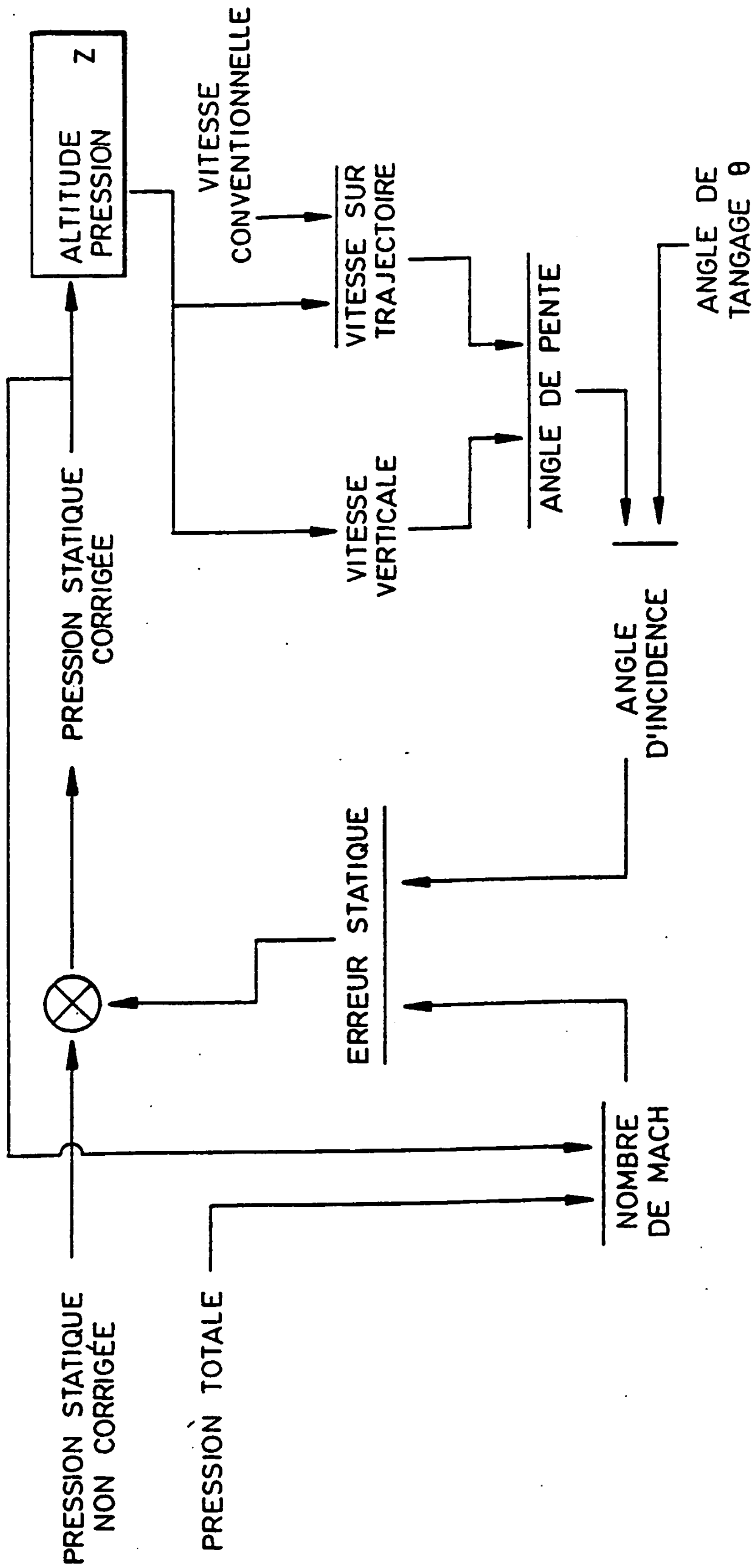
ALTITUDE PRESSION
Z
VITESSE CONVENTIONNELLE
VITESSE SUR TRAJECTOIRE
ANGLE DE PENTE
ANGLE DE TANGAGE θ
VITESSE VERTICALE
PRESSION STATIQUE CORRIGÉE
ANGLE D'INCIDENCE
ERREUR STATIQUE
NOMBRE DE MACH
PRESSION STATIQUE NON CORRIGÉE
PRESSION TOTALE

FIG.3

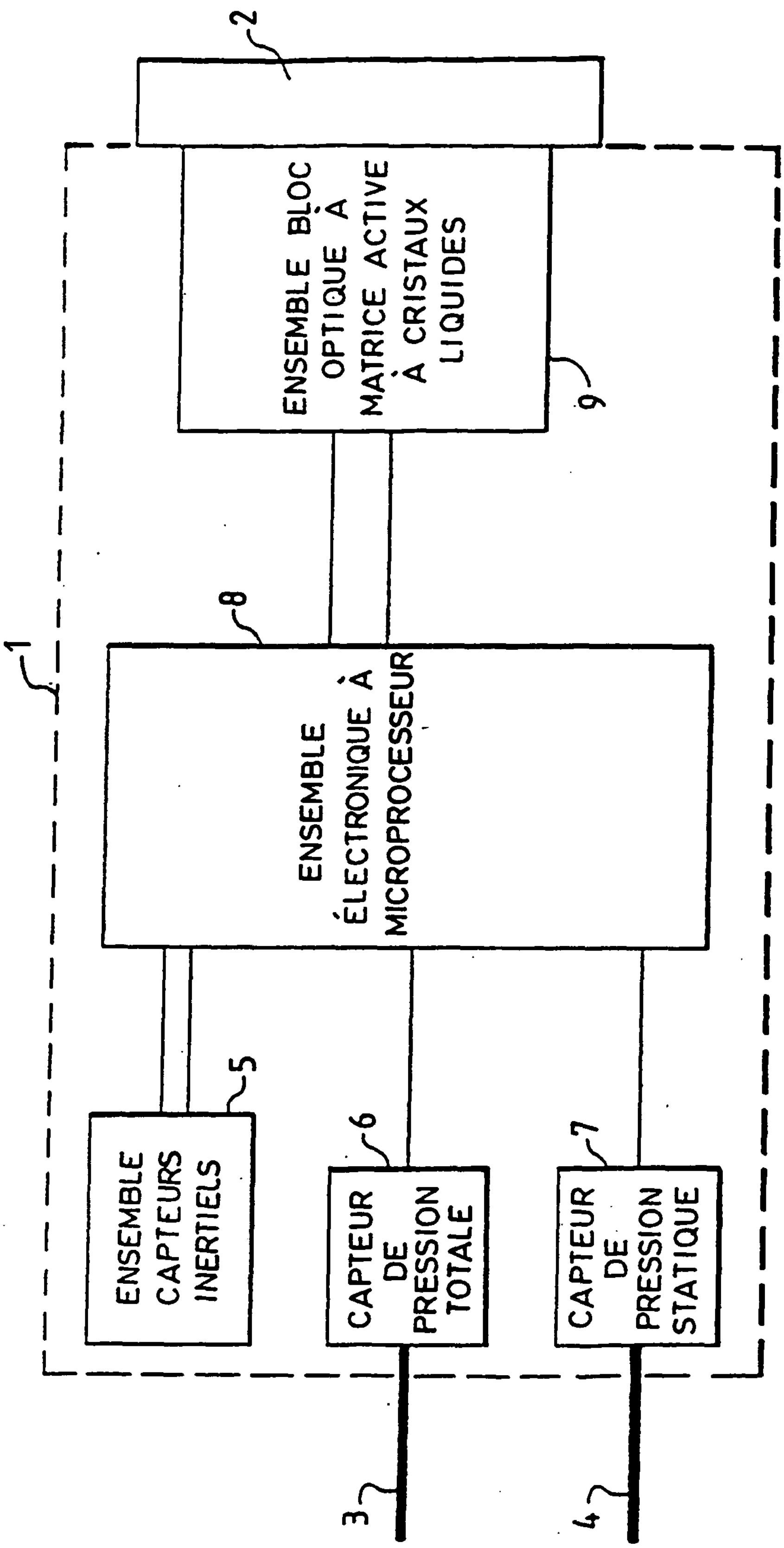
2
ENSEMBLE BLOC OPTIQUE À MATRICE ACTIVE À CRISTAUX LIQUIDES
9
1
8
ENSEMBLE ÉLECTRONIQUE À MICROPROCESSEUR
5
ENSEMBLE CAPTEURS INERTIELS
6
CAPTEUR DE PRESSION TOTALE
7
CAPTEUR DE PRESSION STATIQUE
3
4

FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 4598292 A
- FR 2569848
- FR 2725033
- FR 2614694